# FASCICULE DE BREVET EUROPEEN

(11) **EP 0 780 187 B1**
(45) Date de publication et mention de la délivrance du brevet: **12.09.2001**
(21) Numéro de dépôt: 96402570.4
(22) Date de dépôt: 28.11.1996
(51) Int. Cl.: B23K 15/00, B23K 26/00

(54) **Procédé pour fabriquer une aube en titane alphabeta comprenant un insert de titane beta métastable, et aube réalisée par un tel procédé**
Herstellungsverfahren einer Schaufel aus Alpha-Beta Titan mit einem Einssatz aus metastablen Beta Titan und durch solch ein Verfahren hergestellte Schaufel
Manufacturing process of a blade comprising alpha-beta titanium with an insert at metastable beta titanium and a blade manufactured by such a process

(30) Priorité: 22.12.1995 FR 9515398
(43) Date de publication de la demande: 25.06.1997
(73) Titulaire: GEC ALSTHOM ELECTROMECANIQUE SA, 75116 Paris (FR)
(72) Inventeur: Delmaire, Raymond, 77280 Othis (FR)
(74) Mandataire: Gosse, Michel

(56) Documents cités:
- EP-A- 0 249 092
- FR-A- 2 663 343
- US-A- 5 448 828
- PATENT ABSTRACTS OF JAPAN vol. 013, no. 500 (M-891), 10 Novembre 1989 & JP 01 202389 A (HITACHI LTD), 15 Août 1989,
- PATENT ABSTRACTS OF JAPAN vol. 015, no. 403 (C-0875), 15 Octobre 1991 & JP 03 166349 A (FUJI ELECTRIC CO LTD), 18 Juillet 1991,
- PATENT ABSTRACTS OF JAPAN vol. 013, no. 372 (C-627), 17 Août 1989 & JP 01 127652 A (HITACHI LTD), 19 Mai 1989,

## Description

La présente invention concerne un procédé pour fabriquer une aube en titane αβ comprenant un insert de titane β métastable, et une aube réalisée par un tel procédé.

Plus particulièrement, l'invention se rapporte à un procédé pour fabriquer une aube de turbine en titane αβ comprenant un insert protecteur anti-érosion en titane β métastable rapporté et soudé sur le bord d'attaque de ladite aube.

La nécessité d'augmenter les capacités des turbines à vapeur a amené les constructeurs à augmenter la longueur des aubes de turbines. Dans un premier temps, cette augmentation a été limitée par la force centrifuge se développant du fait de l'inertie des aubes en rotation. Le matériau utilisé était un acier 12% de chrome ayant une densité importante.

Pour reculer cette limitation, les constructeurs ont utilisé du titane αβ qui a sensiblement les mêmes caractéristiques mécaniques que l'acier 12% de chrome, mais une densité moitié de celle de l'acier 12% de chrome. Ainsi, pour une même longueur, une aube en titane αβ développe une force d'inertie centrifuge sensiblement inférieure à une aube en acier 12% de chrome, et des longueurs d'aubes plus importantes sont possibles tout en restant dans les limites des caractéristiques mécaniques du titane αβ.

Ces aubes de grandes dimensions sont notamment utilisées dans l'étage basse pression des turbines à vapeur. De ce fait, elles subissent une érosion de leur bord d'attaque due aux gouttes du fluide moteur qui les traversent. Pour pallier cette érosion, les bords d'attaques de ces aubes sont généralement pourvus d'une protection anti-érosion.

Dans le cas des aubes en acier 12% de chrome, il peut être utilisé un acier du type "Stellite" (Marque déposée par "Higness Stellite Division" d'Union Carbide Corporation), ou une trempe M.F. du bord d'attaque.

Dans le cas des aubes en titane αβ, il est utilisé un insert de titane β métastable rapporté sur le bord d'attaque de l'aube.

Le titane β mis en solution, puis, soudé au titane αβ puis enfin soumis au traitement de durcissement, subit, durant la dernière étape, une modification de structure qui engendre des déformations importantes de l'assemblage. Il en résulte un vrillage ou un cintrage de l'aube qui de ce fait n'est plus dans les cotes prévues.

JP-A-4-63902 concerne un procédé de fabrication d'une pièce en titane αβ comprenant un insert de titane β métastable. Ce procédé pallie l'inconvénient ci-dessus en proposant une ébauche d'aube en titane αβ ayant encore une marge d'usinage sur laquelle est soudé l'insert de titane β, puis l'ensemble subit le traitement de durcissement. Dans une étape ultérieure, l'ébauche est rectifiée aux cotes du plan grâce à la marge d'usinage, de manière à compenser les déformations résultant du traitement de durcissement.

Les coûts générés par cette solution sont élevés du fait du double usinage. En outre, une aube réalisée selon ce procédé ne peut pas être réhabilitée lorsque l'insert anti-érosion est usé. Enfin, certaines aube de grandes dimensions ne peuvent être obtenues par des moyens d'usinage. Ces aubes sont obtenue par matriçage de précision directement aux cotes finies. Le procédé avec surépaisseur n'est alors plus utilisable.

JP-A-62-170464 concerne un procédé de fabrication d'une pièce en titane αβ comprenant un insert de titane β métastable. Selon ce procédé il est utilisé une méthode de soudage TIG avec, comme matériau de soudage, du titane pur. Le soudage TIG, outre le fait qu'il nécessite un matériau d'appoint, affecte thermiquement une zone importante du titane αβ et du titane β métastable. Il en résulte un soudage qui présente une dureté très faible à l'interface entre le titane αβ et le titane pur d'apport pour le soudage, dans le titane pur d'apport, et entre le titane β métastable et le titane pur d'apport pour le soudage.

JP-A-1-200004 concerne un procédé de fabrication d'une pièce en titane αβ comprenant un insert de titane β métastable durcissable par vieillissement. Selon ce procédé, la méthode du soudage est du type à faisceau d'électron, mais ce document enseigne qu'au-delà d'une largeur de 3 mm de la soudure les zones affectées thermiquement sont importantes, et la pièce subit des déformations importantes.

Le but de la présente invention est de proposer un procédé de fabrication d'une aube en titane αβ comprenant un insert de titane β métastable qui améliore sensiblement les procédés précédents en réduisant sensiblement les déformations de l'aube lors de sa fabrication, et en réalisant une soudure présentant une dureté comprise entre la dureté du titane αβ et la dureté du titane β métastable.

A cet effet l'invention concerne un procédé pour fabriquer une aube en titane αβ comprenant un insert de titane β métastable caractérisé en ce que :
on façonne un corps d'aube en titane αβ aux cotes finies, ledit corps d'aube en titane αβ comprenant un emplacement destiné à recevoir ledit insert en titane β;
on effectue une mise en solution dudit insert en titane β; puis
on effectue un traitement de durcissement par vieillissement dudit insert en titane β; puis
on soude ledit insert en titane β durci dans ledit emplacement dudit corps d'aube en titane αβ aux cotes finies avec une méthode de soudage à densité d'énergie contrôlée et localisée.

Selon une autre caractéristique de l'invention on relaxe les contraintes de soudage par un traitement thermique de relaxation.

La méthode de soudage est, par exemple non limitatif, un soudage par faisceau d'électrons ou un soudage par laser. Les cordons de soudage sont abrasés.

Avantageusement le titane αβ est un TA6V.

Avantageusement le titane β métastable est un TA5D4Zr4CEF.

Dans un mode préféré de réalisation :
la mise en solution du titane β métastable comprend une étape de chauffe à 860°C pendant une heure, suivie d'une trempe à l'huile;
le durcissement du titane β métastable se fait à 550°C pendant une heure sous Argon ventilé;
le soudage se fait sous hélium;
le traitement thermique de relaxation se fait à 550°C pendant une heure sous Argon ventilé suivi d'un refroidissement sous Argon.

L'insert est façonné aux cotes finies indifféremment avant ou après l'étape de soudage.

L'invention concerne aussi un procédé de réparation d'une aube de turbine à vapeur fabriquée selon la description ci-dessus, et présentant un insert anti-érosion usé. Selon l'invention :
on usine ladite aube pour éliminer les restes de l'insert anti-érosion usé, et
on traite et on soude un nouvel insert anti-érosion selon les étapes du procédé décrit ci-dessus.

Un premier avantage de la présente invention résulte du durcissement du titane β métastable préalablement à l'étape de soudage. Cela permet d'éviter le cintrage des aubes lors de traitement thermique post-soudage.

Le traitement thermique post-soudage étant possible, la relaxation des contraintes de soudures permet de présenter une dureté croissante de l'aube du titane αβ vers le titane β métastable.

Un autre avantage résulte de la possibilité de changer un insert anti-érosion usé sur une aube.

D'autres avantages et caractéristiques de la présente invention résulteront de la description qui va suivre en référence aux dessins annexés dans lesquels :

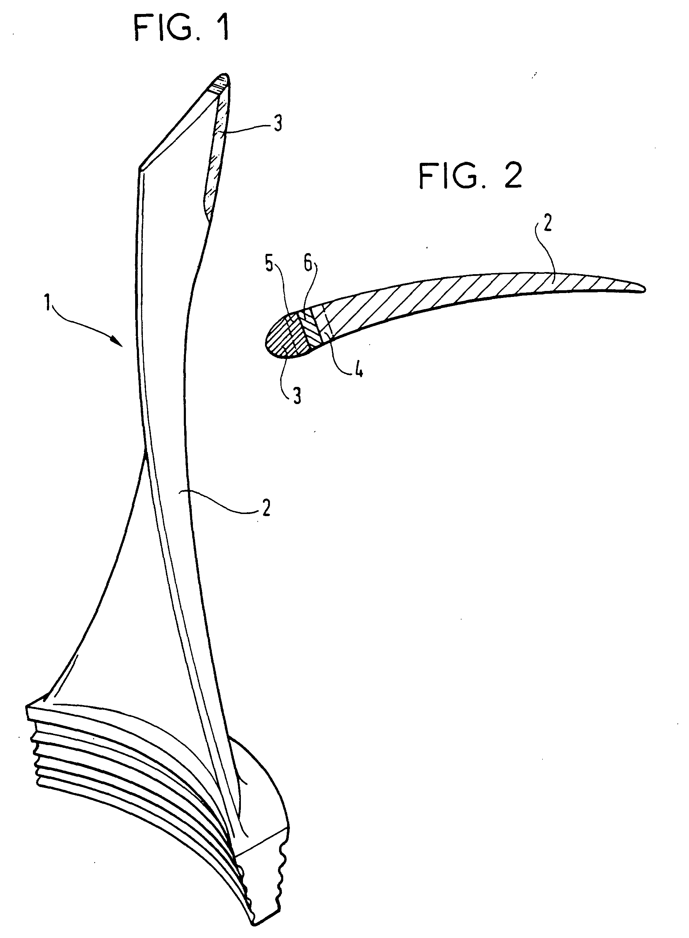

la figure 1 est une vue schématique d'une aube de turbine à vapeur réalisée selon le procédé de l'invention.

La figure 2 est une vue schématique en coupe d'une aube de turbine à vapeur réalisée selon le procédé de l'invention.

Selon le procédé de l'invention, on fabrique une aube 1 de turbine à vapeur comprenant un corps d'aube 2 en titane αβ et un insert 3 en titane β métastable. L'insert 3 en titane β métastable est localisé sur le bord d'attaque de l'aube, et a pour fonction de protéger ce bord d'attaque contre l'érosion due aux gouttelettes d'eau présente dans la turbine à vapeur.

Le procédé pour fabriquer une aube en titane αβ comprenant un insert de titane β métastable comprend les étapes suivantes :
on façonne le corps d'aube 2 en titane αβ aux cotes finies, et on aménage un emplacement destiné à recevoir ledit insert 3 en titane β;
on effectue une mise en solution dudit insert 3 en titane β; puis
on effectue un traitement de durcissement dudit insert 3 en titane β; puis
on soude ledit insert 3 en titane β dans ledit emplacement dudit corps d'aube 2 en titane αβ aux cotes finies avec une méthode de soudage à densité d'énergie contrôlée et localisée.

On entend par méthode de soudage à densité d'énergie contrôlée et localisée, une méthode sans apport de matériau de soudage autre que le titane αβ de l'aube et le titane β métastable de l'insert, et selon laquelle les zones affectées thermiquement 4, 5 respectivement du titane αβ et du titane β métastable, et la zone fondue 6 sont de dimensions réduites.

Une telle méthode de soudage est par exemple un soudage par faisceau d'électrons ou un soudage par laser.

L'étape de durcissement préalable à l'étape de soudage est une caractéristique importante du présent procédé. De cette façon, les modifications de structures du titane β métastable sont accomplies avant l'étape de soudure, et tout traitement thermique supplémentaire de l'aube, pourvue de son insert, ultérieurement à l'étape de soudure, n'affectera pas l'assemblage.

Avantageusement, on effectue un traitement thermique de relaxation des contraintes de soudage après l'étape de soudage. Cette étape permet de remonter les caractéristiques mécaniques de la zone fondue et des zones affectées thermiquement.

Dans un exemple de réalisation non limitatif, le titane αβ est un TA6V, le titane β métastable est un TA5D4Zr4CEF, et les caractéristiques du procédé sont les suivantes :
la mise en solution du titane β métastable comprend une étape de chauffe à 860°C pendant une heure, suivie d'une trempe à l'huile;
le durcissement du titane β métastable se fait à 550°C pendant une heure sous Argon ventilé;
le soudage se fait sous hélium;
le traitement thermique de relaxation se fait à 550°C pendant une heure sous Argon ventilé suivi d'un refroidissement sous Argon.

Tableau 1 ci dessous représente les duretés Vickers de l'aube fabriquée selon l'exemple de réalisation de l'invention.

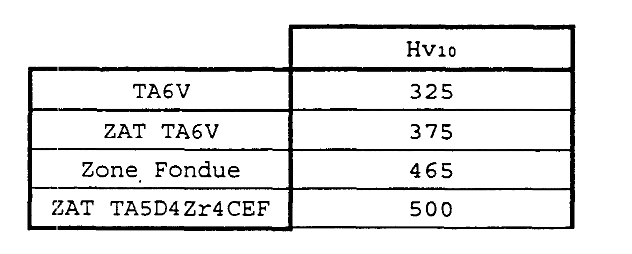

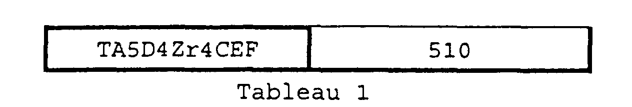

Le tableau 1 montre que la dureté de l'aube est une fonction monotone croissante entre le corps d'aube 2 en TA6V et l'insert 3 en TA5D4Zr4CEF. En outre il est remarquable que les zones affectées thermiquement (ZAT) et la zone fondue ne constituent pas un puits de faible dureté comme dans l'art antérieur.

Il a été aussi réalisé des essais en traction avec des éprouvettes issues d'une aube fabriquée selon l'exemple de réalisation de l'invention.

Un premier jeu d'éprouvettes a été réalisé dans le TA5D4Zr4CEF, la valeur moyenne obtenue est de 1550 MPa.

Un deuxième jeu d'éprouvettes a été réalisé dans les ZAT 4, 5 et la zone fondue 6, la valeur moyenne obtenue est de 1020 MPa, la rupture ayant lieu dans la ZAT du TA6V.

Un troisième jeu d'éprouvettes a été réalisé dans le TA6V, la valeur moyenne obtenue est de 960 MPa.

Là encore on constate une continuité croissante monotone entre le TA6V et le TA5D4Zr4CEF.

L'invention concerne aussi un procédé de réparation d'une aube 1 de turbine à vapeur fabriquée selon la description ci-dessus et présentant un insert anti-érosion usé.

Selon ce procédé :
on usine ladite aube 1 pour éliminer les restes de l'insert anti-érosion usé, et
on traite et on soude un nouvel insert anti-érosion selon les étapes du procédé décrit ci-dessus.

L'invention concerne enfin une aube 1 de turbine à vapeur comprenant un insert anti-érosion, fabriquée ou réparée selon les procédés de l'invention.

Bien entendu, l'invention n'est pas limitée au mode de réalisation décrit et représenté, mais elle est susceptible de nombreuses variantes accessibles à l'homme du métier sans que l'on s'écarte de l'invention. En particulier, on pourra, sans sortir du cadre de l'invention, remplacer les alliages à base de titane par d'autre alliage à base de titane sans sortir du cadre de l'invention.

## Revendications

1. Procédé pour fabriquer une aube (1) en titane αβ comprenant un insert (3) de titane β métastable dans lequel :
on façonne un corps d'aube (2) en titane αβ aux cotes finies, ledit corps d'aube (2) en titane αβ comprenant un emplacement destiné à recevoir ledit insert (3) en titane β;
on effectue une mise en solution dudit insert (3) en titane β; puis
on effectue un traitement de durcissement par vieillissement dudit insert (3) en titane β; puis
on soude ledit insert (3) en titane β dans ledit emplacement dudit corps d'aube (2) en titane αβ aux cotes finies avec une méthode de soudage à densité d'énergie contrôlée et localisée.

2. Procédé selon la revendication 1 **caractérisé en ce qu'**on relaxe les contraintes de soudage par un traitement thermique de relaxation.

3. Procédé selon la revendication 1 ou 2 **caractérisé en ce que** la méthode de soudage est un soudage par faisceau d'électrons.

4. Procédé selon la revendication 1 ou 2 **caractérisé en ce que** la méthode de soudage est un soudage par laser.

5. Procédé selon l'une quelconque des revendications 1 à 4 **caractérisé en ce que** le titane αβ est un TA6V.

6. Procédé selon l'une quelconque des revendications 1 à 5 **caractérisé en ce que** le titane β métastable est un TA5D4Zr4CEF.

7. Procédé selon l'une quelconque des revendications 2 à 6 **caractérisé en ce que** :
la mise en solution du titane β métastable comprend une étape de chauffe à 860°C pendant une heure, suivie d'une trempe à l'huile;
le durcissement du titane β métastable se fait à 550°C pendant une heure sous Argon ventilé;
le soudage se fait sous hélium;
le traitement thermique de relaxation se fait à 550°C pendant une heure sous Argon ventilé suivi d'un refroidissement sous Argon.

8. Procédé selon l'une quelconque des revendications 1 à 7 **caractérisé en ce que** les cordons de soudage sont abrasés.

9. Procédé selon l'une quelconque des revendications 1 à 8 **caractérisé en ce que** l'insert (3) est façonné aux cotes finies avant l'étape de soudage.

10. Procédé selon l'une quelconque des revendications 1 à 8 **caractérisé en ce que** l'insert (3) est façonné aux cotes finies après l'étape de soudage.

11. Procédé de réparation d'une aube (1) de turbine à vapeur fabriquée selon l'une quelconque des revendications 1 à 10 et présentant un insert anti-érosion usé, dans lequel :
on usine ladite aube (1) pour éliminer les restes de l'insert anti-érosion usé, et
on traite et on soude un nouvel insert anti-érosion selon les étapes du procédé de l'une quelconque des revendications 1 à 10

## Patentansprüche

1. Verfahren zur Herstellung einer Schaufel (1) aus α,β-Titan, die einen Einsatz (3) aus metastabilem *β*-Titan umfasst, in welchem:
ein Schaufelkörper (2) aus α,β-Titan mit Endmaßen geformt wird, wobei der Schaufelkörper (2) aus *α,β*-Titan eine Stelle umfasst, die dafür vorgesehen ist den Einsatz (3) aus *β*-Titan aufzunehmen,
ein Lösen des Einsatzes (3) aus *β*-Titan durchgeführt wird; dann
eine Härtungsbehandlung durch Alterung des Einsatzes (3) aus *β*-Titan durchgeführt wird; dann
der Einsatz (3) aus *β*-Titan mit einem Schweißverfahren mit kontrollierter und örtlich begrenzter Energiedichte an der Stelle des Schaufelkörpers (2) aus *α*,*β*-Titan mit Endmaßen angeschweißt wird.

2. Verfahren nach Anspruch 1, **dadurch gekennzeichnet, dass** die Spannungen des Schweißens durch eine Relaxations-Wärmebehandlung geschwächt werden.

3. Verfahren nach Anspruch 1 oder 2, **dadurch gekennzeichnet, dass** das Schweißverfahren ein Elektronenstrahlschweißen ist.

4. Verfahren nach Anspruch 1 oder 2, **dadurch gekennzeichnet, dass** das Schweißverfahren ein Laserschweißen ist.

5. Verfahren nach einem der Ansprüche 1 bis 4, **dadurch gekennzeichnet, dass** das *α* ,*β*-Titan ein TA6V ist.

6. Verfahren nach einem der Ansprüche 1 bis 5, **dadurch gekennzeichnet, dass** das metastabile *β* -Titan ein TA5D4Zr4CEF ist.

7. Verfahren nach einem der Ansprüche 2 bis 6, **dadurch gekennzeichnet, dass**:
das Lösen des metastabilen β-Titans einen Heizschritt bei 860°C über eine Stunde, gefolgt von einer Ölhärtung umfasst;
die Härtung des metastabilen β-Titans bei 550°C über eine Stunde unter ventiliertem Argon erfolgt;
das Schweißen unter Helium erfolgt;
die Relaxations-Wärmebehandlung bei 550°C über eine Stunde unter ventiliertem Argon, gefolgt von einer Abkühlung unter Argon erfolgt.

8. Verfahren nach einem der Ansprüche 1 bis 7, **dadurch gekennzeichnet, dass** die Schweißraupen abgeschliffen werden.

9. Verfahren nach einem der Ansprüche 1 bis 8, **dadurch gekennzeichnet, dass** der Einsatz (3) vor dem Schweißschritt auf Endmaße bearbeitet wird.

10. Verfahren nach einem der Ansprüche 1 bis 8, **dadurch gekennzeichnet, dass** der Einsatz (3) nach dem Schweißschritt auf Endmaße bearbeitet wird.

11. Verfahren zur Reparatur einer Schaufel (1) einer Dampfturbine, die nach einem der Ansprüche 1 bis 10 hergestellt wurde und einen abgenutzten Antiverschließeinsatz aufweist, in welchem:
die Schaufel (1) bearbeitet wird, um die Reste des abgenutzten Antiverschleißeinsatzes zu beseitigen, und
ein neuer Antiverschleißeinsatz gemäß den Schritten des Verfahrens eines der vorhergehenden Ansprüche 1 bis 10 behandelt und angeschweißt wird.

## Claims

1. A method of manufacturing a blade (1) made of αβ titanium including an insert (3) of metastable β titanium, in which method:
a blade body (2) made of **αβ** titanium is made to the finished design dimensions, said blade body (2) made of **αβ** titanium including a location designed to receive said insert (3) made of β titanium:
said insert (3) made of β titanium is put into solution; then
hardening treatment is performed to harden by aging said insert (3) made of β titanium; then
said insert (3) made of β titanium is welded to said location of said blade body (2) made of αβ titanium to the finished design dimensions using a welding technique having localized and controlled energy density.

2. A method according to claim 1, **characterized in that** welding stress is relieved by stress-relieving heat treatment.

3. A method according to claim 1 or 2, **characterized in that** the welding technique is electron-beam welding.

4. A method according to claim 1 or 2, **characterized in that** the welding technique is laser welding.

5. A method according to any one of claims 1 to 4, **characterized in that** the **αβ** titanium is a TA6V.

6. A method according to any one of claims 1 to 5, **characterized in that** the metastable β titanium is a TA5D4Zr4CEF.

7. A method according to any one of claims 2 to 6, **characterized in that**:
the metastable β titanium is put into solution by a heating step at 860°C for one hour, followed by oil quenching;
the metastable β titanium is hardened at 550°C for one hour under a flow of argon;
welding is performed under helium; and
the stress-relieving heat treatment takes place at 550°C for one hour under a flow of argon, followed by cooling under argon.

8. A method according to any one of claims 1 to 7, **characterized in that** the weld fillets are abraded.

9. A method according to any one of claims 1 to 8, **characterized in that** the insert (3) is made to the finished design dimensions before the welding step.

10. A method according to any one of claims 1 to 8, **characterized in that** the insert (3) is made to the finished design dimensions after the welding step.

11. A method of repairing a steam-turbine blade (1) manufactured according to any one of claims 1 to 10, and having a worn anti-erosion insert, in which method:
said blade (1) is machined to eliminate the remains of the worn anti-erosion insert, and
a new anti-erosion insert is treated and welded by application of the steps of the method of any one of claims 1 to 10.
